# EUROPEAN PATENT APPLICATION

(11) **EP 0 859 363 A1**
(43) Date of publication of application: **19.08.1998**
(21) Application number: 98106252.4
(22) Date of filing: 10.05.1994
(51) Int. Cl.: G11B 23/087

(54) **Tape cassette**

(30) Priority: 11.05.1993 JP 132982/93; 20.05.1993 JP 141434/93
(62) Divisional of application: 94303353.0
(71) Applicant: VICTOR COMPANY OF JAPAN, LIMITED, Yokohama-Shi Kanagawa-Ken 221 (JP)
(72) Inventor: Hashimoto, Yasufumi, Katsuta-shi, Ibaraki-ken (JP); Umeda, Hiroyuki, Saganihara-shi, Kanagawa-ken (JP); Ohira, Tsunehisa, Kanagawa-ken, Japanaka-ken (JP)
(74) Representative: Gladwin, Philip

(57) **Abstract**

The present invention discloses a tape cassette having a front lid for protecting a magnetic face of a magnetic tape accommodated in a casing made of upper and lower half members against dust or the like, and a connecting plate and a rear lid suspended from the connecting plate for protecting an upper portion and a lower portion of the rear face of the magnetic tape respectively. The front lid is rotatably supported at sides of the casing. The rear lid is rotatably suspended on the connecting plate which is rotatably supported on the front lid. The magnetic tape is protected between the front lid and the rear lids together with the connecting plate in a lid closed state. A pair of pins provided on the rear lid is snugly fitted in a pair of guide grooves formed in protruding portions provided in the lower half member so that the rear lid may move in opening and closing directions. The guide grooves have open tops so that the pins of the rear lid are easily inserted into the guide grooves in the assembly process. The open tops are covered with front rims provided on the upper half member in the assembly process.

## Description

### BACKGROUND OF THE INVENTION

### Field of the Invention

The present invention relates to a tape cassette for use with a magnetic recording and/or reproducing apparatus. Particularly, the present invention relates to a tape cassette having front and rear lids for protecting a magnetic tape against dust and having its rear lid suspended from the front lid by means of a connecting plate.

### Description of the Related Art

A tape cassette to be used with a magnetic recording and/or reproducing apparatus such as a video tape recorder is exemplified by a VHS standard tape cassette having a tape width of 1/2 inch, or by an 8mm tape cassette having a tape width of 8 mm, as is well known in the prior art.

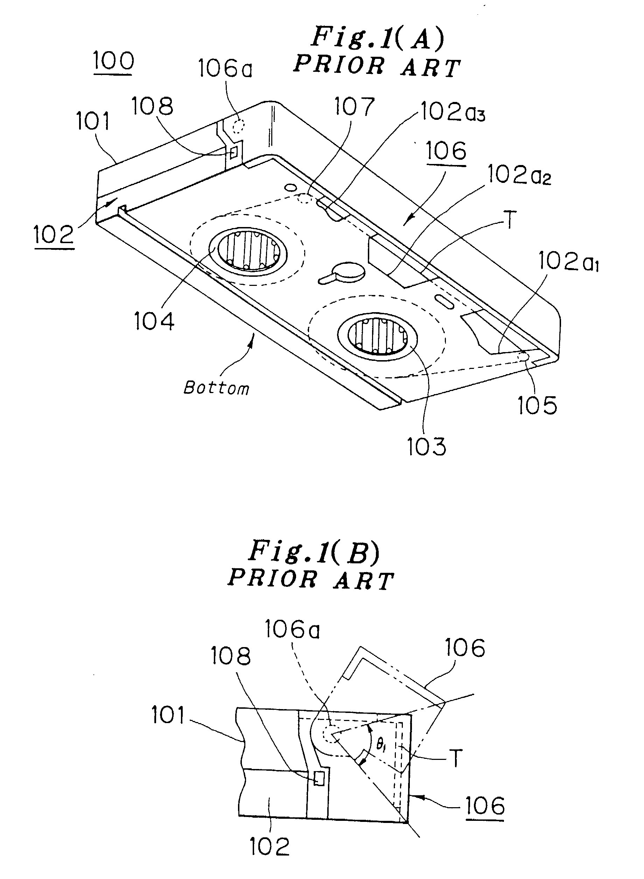

Fig. 1(A) is a perspective view of the VHS standard tape cassette; and Fig. 1(B) is a side view for explaining a lid opening action of the VHS standard tape cassette.

A VHS tape cassette 100, as shown in Figs. 1(A) and 1(B), is assembled from an upper half member 101 and a lower half member 102 into a box-shaped casing. This VHS standard tape cassette 100 is used to perform recording and/or reproducing operations by not-shown magnetic recording and/or reproducing apparatuses. For these operations, the VHS standard tape cassette 100 has its external size and shape generally standardized to keep interchangeability with the apparatus.

Moreover, a magnetic tape T is made to move between a supply reel 103 and a take-up reel 104, which are disposed in the VHS standard tape cassette 100. The magnetic tape T wound on the supply reel 103 is guided around a supply side guide pole 105 and along a front lid 106 disposed at openings 102a of the lower half member 102 and is guided around a take-up side guide pole 107 so as to be taken-up on the take-up reel 104.

The openings 102a₁∼102a₃ of the lower half member 102 is opened at its bottom for permitting insertion of tape loading members (not-shown) of the apparatus.

On the other hand, the front lid 106 is provided for protecting the magnetic face of the magnetic tape T against dust and finger-prints or the like. This front lid 106 is so supported at the right-hand and left-hand sides of the tape cassette 100 that it can be opened or closed on a pair of pins 106a and 106a (although only one is shown) integrated with the inner side of the right-hand and left-hand sides of the front lid 106. However, the front lid 106 is retained and closed by a front lid lock member 108 disposed at the left-hand side of the tape cassette 100.

Referring to Fig. 1(B), only when the VHS standard tape cassette 100 is inserted into the magnetic recording and/or reproducing apparatus, the front lid lock member 108 is released by a lid opening device of the apparatus so that the front lid 106 is opened on the pins 106a formed on the front lid 106, as indicated by double-dotted lines. At this time, an opening angle θ₁ of the front lid 106 is not so large for a small-sized, lightweight portable apparatus but is sufficiently large for a large-sized tape deck or professional-use apparatus.

With the front lid 106 being opened, the apparatus is loaded with the magnetic tape T along its predetermined tape path by the (not-shown) tape loading members entered into the openings 102a₁∼102a₃.

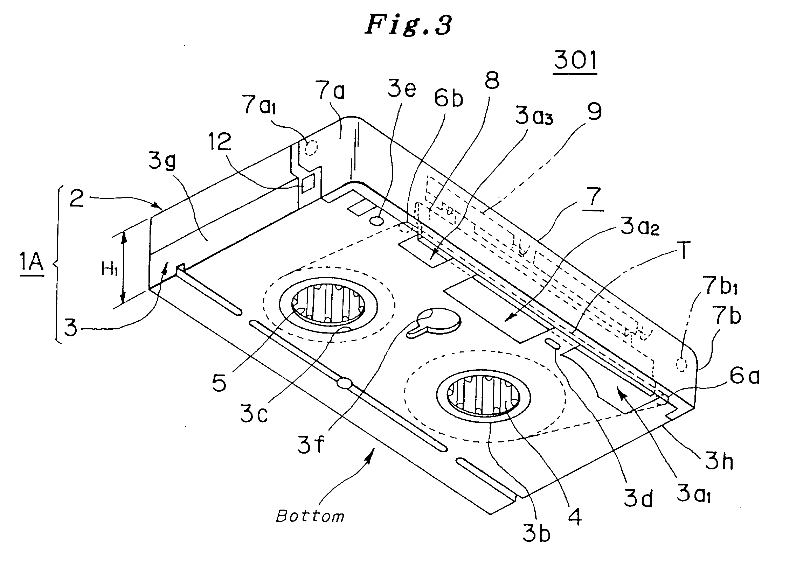

Fig. 2(A) is a perspective view of the 8 mm tape cassette of the prior art; and Fig. 2(B) is a side view for explaining a lid opening action of the 8 mm tape cassette.

On the other hand, the 8 mm tape cassette 200 as shown in Fig. 2(A) and 2(B), has a construction substantially similar to the aforementioned one and is assembled of upper and lower half members 201 and 202 into a box-shaped casing, which is equipped therein with a supply reel 203 and a take-up reel 204 for causing the magnetic tape T to move. At an opening 202a provided on the lower half member 202 and at the back of a front lid 205, there is disposed a rear lid 206 for protecting the back face of the magnetic tape T, the side opposite to the magnetic tape.

This 8 mm tape cassette 200 is disclosed in the Japanese Laid-Open Patent Publication No. 168979/1984. Here, a brief description is given to the vicinity of the front lid 205 and the rear lid 206. Along the front lid 205 which is disposed at the side of the opening 202a of the lower half member 202, there is guided the magnetic tape T which is protected while being interposed between the front lid 205 and the rear lid 206.

Specifically, the front lid 205 is so supported at the right-hand and left-hand sides of the upper and lower half members 201 and 202 that it can be freely opened or closed on a pair of pins 205a and 205a formed integrally with the inner walls of the right-hand and left-hand sides thereof. From the middle portion of the front lid 205, on the other hand. there concurrently depend a pair of projections 205b and 205b, which rotatably support the generally "T-shaped" rear lid 206 such that the rear lid 206 can rotate by means of a pair of pins 206a and 206a integrated therewith.

From the lower ends of the right-hand and left-hand sides of the rear lid 206, there are concurrently projected a pair of guide pins 206b and 206b. These guide pins 206b and 206b are fitted in a pair of guide grooves 202b and 202b which are formed in the right-hand and left-hand sides of the opening 202a of the lower half member 202.

Only when a not-shown magnetic recording and/or reproducing apparatus is loaded with the 8mm tape cassette 200, as shown in Fig. 2(B), the front lid 205 and the rear lid 206 are opened together by a lid opening device of the apparatus, rotating around the supporting pins 205a formed on the front lid 205 which opens, as indicated by double-dotted lines.

Here, the rear lid 206 associatively with the opening action of the front lid 205 has to be opened to a position where the rear lid 206 is not contacted with the tape loading member for extracting the magnetic tape. However, a center of rotation of the rear lid 206 is in accordance with a common center line of the pair of pins 206a each projecting from a respective side thereof, thus, the rear lid 206 has only one phase in freedom of motion in the lid opening action, which requires the front lid to be opened largely.

In recent years, the magnetic tape T is required to undergo the recording and/or reproducing operations in a high density with excellent performance quality. At the present stage, moreover, the recording and reproducing operations can be digitally effected, the recording and/or reproducing qualities are apt to be seriously deteriorated if the magnetic tape T becomes dusty or is stained with fingerprints as well as foreign objects from the openings 102a₁∼102a₃.

It is, therefore, considered that member corresponding to the disclosed rear lid (206) of the aforementioned 8 mm tape cassette 200 is attached to the VHS tape cassette 100. However, the not-shown magnetic recording and/or reproducing apparatus adopting the VHS tape cassette 100 has already been widely used in the relevant field. Considering the interchangeability between the VHS tape cassette 100 and the apparatus, the following problems (1)∼(3) will arise to the users seriously, if the construction of the 8 mm tape cassette 200 is applied to the VHS tape cassette 100 as it is. Thus, it is difficult to adopt the member corresponding to the rear lid (206) into the existing construction.
(1) When the member corresponding to the rear lid (206) of the aforementioned construction of the 8 mm tape cassette 200 is adopted as it is, the lid opening and closing actions of the member corresponding to the rear lid associatively with the opening action of the front lid 205 are difficult to be done smoothly. Alternatively, there may be considered another method that the member corresponding to the rear lid (206) is suspended from the front lid 205 by using connecting means, wherein there is a problem to be solved, i.e., how to completely cover the back face of the magnetic tape.
(2) In the apparatus of the type such as a portable video deck or a video movie, the front lid has its open angle designed to the minimum so as to reduce the size. In case, therefore, the member corresponding to the rear lid (206) of the aforementioned construction of the 8 mm tape cassette 200 adopted, that member can not be opened sufficiently and will collide with the tape loading members for extracting the magnetic tape T into the apparatus.
(3) In the apparatus of the type such as a large-sized video deck or a video deck for professional use, on the other hand, the open angle of the front lid is designed to a sufficient value. In case, therefore, the member corresponding to the rear lid (206) of the construction of the aforementioned 8 mm tape cassette 200, the guide pins (206b, 206b) of the member corresponding to the rear lid (206) will come upward out of the guide grooves (202b, 202b) and be damaged when the member corresponding to the rear lid (206) is closed.

In summary, the rear lid opening/closing structure associated with the front lid have to be constructed so that the rear lid is connected to the front lid by means of the connecting plate not only to increase phases in freedom of motion but also to completely cover the back face of the magnetic tape with the rear lid together with the connecting plate. Further, when the rear lid is sufficiently opened associatively with the opening action of the front lid, the guide pins provided on the rear lid have to be prevented from coming off the open tops of the guide grooves. Furthermore, in the assembly process, when the upper half member temporarily fabricated with front lid provided with the rear lid by means of the connecting plate is assembled into the casing, the guide pins of the rear lid have to be securely fitted in the guide grooves in efficient manners without contacting with the magnetic tape, no matter how much its external shape might be different. Thus, there has been desired a tape cassette which can satisfy those conditions.

### SUMMARY OF THE INVENTION

Accordingly, a general object of the present invention is to provide a novel and useful tape cassette in which the above disadvantage has been eliminated.

A more specific object of the present invention is to provide a tape cassette having a casing for accommodating a pair of reels disposed in the casing for winding a magnetic tape on the pair of reels and threading the magnetic tape along a front of the casing, a front lid disposed in openable/closable manners at the front of the casing for protecting a front face of the magnetic tape and a rear lid disposed at a back side of the front lid for protecting a back face of the magnetic tape, wherein the tape cassette comprises, plate supporting means provided on an upper side of the front lid, a connecting plate having arm member means and first pin means for rotatably supporting the connecting plate on the plate supporting means of the front lid to protect an upper portion of the back face of the magnetic tape when the front lid is closed, the rear lid comprising second pin means and guide pin means for operating in cooperation with opening and closing actions of the front lid, the rear lid being suspended from the connecting plate by causing the second pin means to engage with the arm member means of the connecting plate to protect a lower portion of the back face of the magnetic tape, guide groove means provided in the casing for slidably guiding the guide pin means in the lid opening and closing directions by being engaged with the guide pin means of the rear lid, first biasing means for biasing the front lid in lid opening direction, second biasing means for displacing the rear lid in the lid opening direction by biasing the connecting plate toward a direction of the upper side of the front lid, and rear lid restricting means for restricting an opening action of the rear lid biased in the lid opening direction by the second biasing means when the front lid is closed.

Another specific object of the present invention is to provide a tape cassette having a casing comprising an upper half member and a lower half member for accommodating a pair of reels disposed in the casing for winding a magnetic tape on the pair of reels and threading the magnetic tape along opening means, a front lid disposed in openable/closable manners at the front of the casing for protecting a front face of the magnetic tape and a rear lid disposed at a back side of the front lid for protecting a back face of the magnetic tape, wherein said tape cassette comprises, the opening means defined in a front of the lower half member for allowing insertion of tape loading members of a recording and reproducing apparatus, and a pair of tape guides for guiding the magnetic tape therealong, the pair of tape guide projecting outwardly from a wall of the lower half member in the opening means in such a manner that the opening means is divided into three openings.

### BRIEF DESCRIPTION OF THE DRAWINGS

Fig. 1(A) is a perspective view of the VHS standard tape cassette of the prior art;
Fig. 1(B) is a side view for explaining a lid opening action of the VHS standard tape cassette of Fig. 1(A);
Fig. 2(A) is an exploded perspective view of the 8 mm tape cassette of the prior art;
Fig. 2(B) is a side view for explaining a lid opening action of the 8 mm tape cassette of Fig. 2(A);
Fig. 3 is a perspective view showing an entire construction of a tape cassette according to the present invention;
Fig. 4 is, partially broken, an exploded perspective view showing a front lid, a rear lid and a connecting plate together with their vicinity constituting essential parts of the tape cassette according to the present invention;
Fig. 5 is a partially broken, an exploded perspective view showing a state where the rear lid and the connecting plate are attached to the front lid;
Fig. 6(A) is a cross-sectional view for explaining an assembly of main parts of the present invention, wherein the rear lid and the connecting plate are attached to the front lid;
Fig. 6(B) is a cross-sectional view for explaining an assembly of main parts of the present invention, wherein the front lid is attached to an upper half member;
Fig. 6(C) is a cross-sectional view for explaining an assembly of main parts of the present invention, wherein the front lid is attached to a lower half member;
Fig. 7 is, partially broken, a partial perspective view showing, in an assembled state, the tape cassette where the front lid attached with the connecting plate and the rear lid is assembled in a casing.
Fig. 8(A) is a cross-sectional view for explaining lid opening and closing actions of the tape cassette, wherein the front lid, the rear lid and the connecting plate are closed;
Fig. 8(B) is a cross-sectional view for explaining lid opening and closing actions of the tape cassette, wherein the front lid, the rear lid and the connecting plate are on the way to the opening state; and
Fig. 8(C) is a cross-sectional view for explaining lid opening and closing actions of the tape cassette, wherein the front lid is fully opened, and the pin of the rear lid comes to the open top of the guide groove of the lower half member.

### DETAILED DESCRIPTION OF THE PREFERRED EMBODIMENTS

The tape cassette according to the present invention will be described in the following in connection with the embodiments thereof with reference to Figs. 3 to 8(C). This description will be made in detail individually for the embodiments in the order of the items of <Construction of Tape Cassette> and <Lid Opening Action of Tape Cassette>.

### <Construction of Tape Cassette>

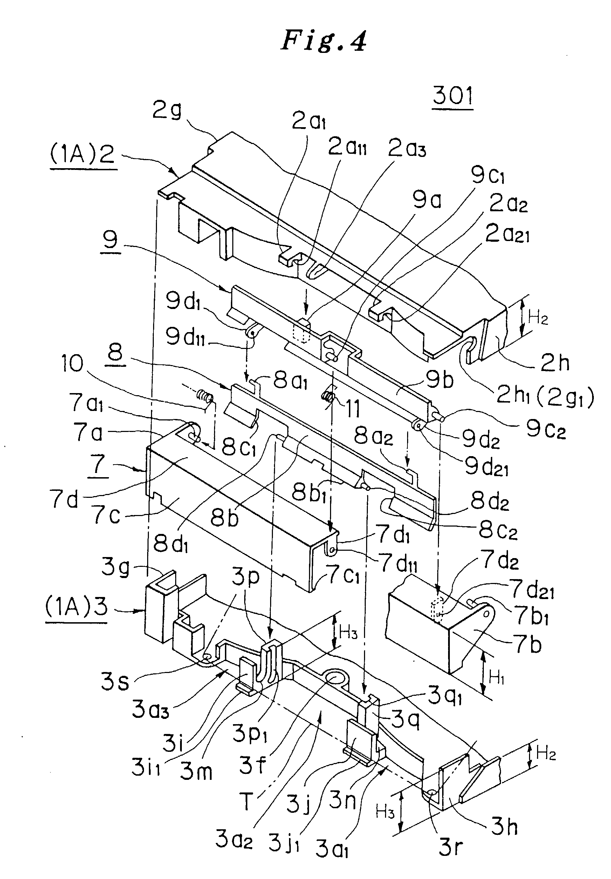

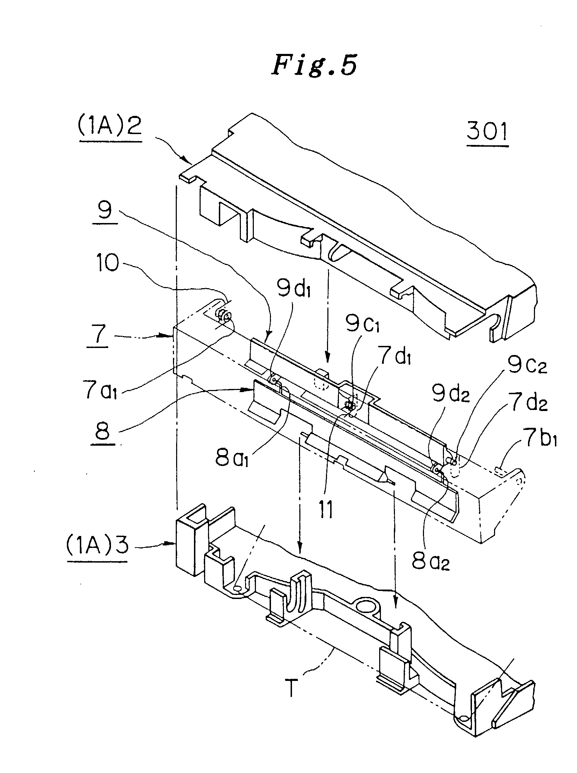

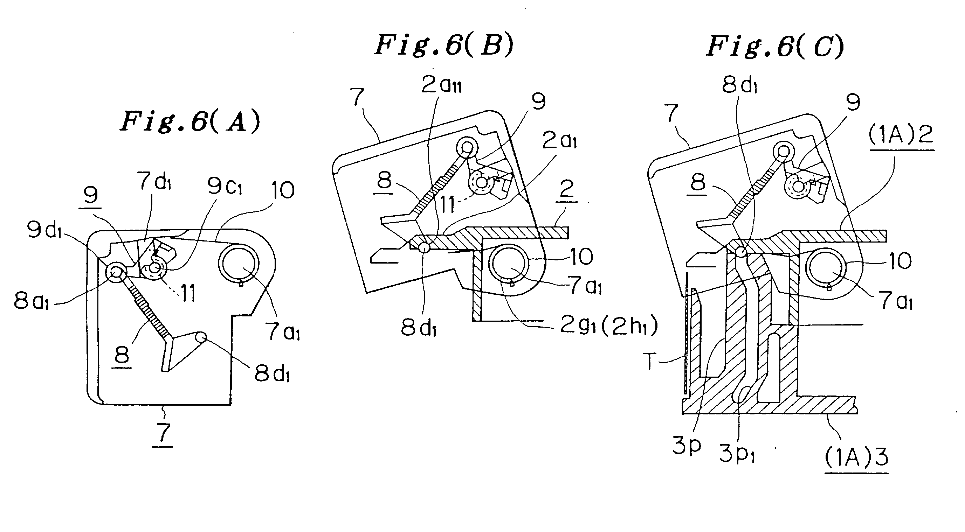

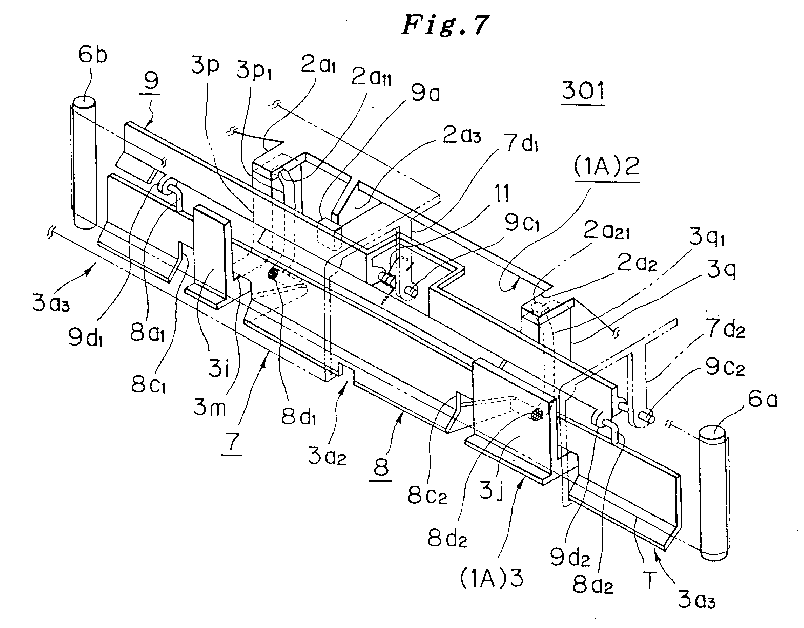

Fig. 3 is a perspective view showing an entire construction of a tape cassette according to the present invention; Fig. 4 is, partially broken, an exploded perspective view showing a front lid, a rear lid and a connecting plate together with their vicinity constituting essential parts of the tape cassette according to the present invention; Fig. 5 is a partially broken, an exploded perspective view showing a state where the rear lid and the connecting plate are attached to the front lid; Fig. 6(A) is a cross-sectional view for explaining an assembly of main parts of the present invention, wherein the rear lid and the connecting plate are attached to the front lid; Fig. 6(B) is a cross-sectional view for explaining an assembly of main parts of the present invention, wherein the upper half member having the front lid is attached to an upper half member; Fig. 6(C) is a cross-sectional view for explaining an assembly of main parts of the present invention, wherein the front lid is attached to a lower half member; and Fig. 7 is, partially broken, a partial perspective view showing, in an assembled state, the tape cassette where the front lid attached with the connecting plate and the rear lid is assembled into a casing.

A tape cassette 301 of the present invention, as shown in Fig. 3, is halved into an upper half member 2 and a lower half member 3 of a resin material such that the upper half member 2 and the lower half member 3 are assembled into a box-shaped casing 1A. This casing 1A is equipped therein with a supply reel 4 and a take-up reel 5, between which a magnetic tape T is provided to move. The magnetic tape T wound on the supply reel 4 is guided, after having passed around a guide pole 6a (as clearly shown in Fig. 3) at a supply side, through a gap between a front lid 7 and a rear lid 8, which are disposed at a front side of openings 3a₁∼3a₃ provided at a bottom of the lower half member 3, and is taken up by the take-up reel 5 after having passed a guide pole 6b at a take-up side.

In addition to these opening 3a₁∼3a₃, the lower half member 3 is provided on its bottom: with holes 3b and 3c, which are aligned correspondingly with the supply reel 4 and the take-up reel 5: with positioning holes 3d and 3e located in the vicinity of the opening 3a for positioning the tape cassette 301 in the apparatus: and with a hole 3f for accepting a light emitting element (not-shown) for detecting the loaded state of the magnetic tape T.

The aforementioned front lid 7 provided at a front of casing 1A is supported in openable and closable manners on the left-hand and right-hand sides 3g and 3h of the casing 1A by means of a pair of pins 7a₁ and 7b₁ (although only the pin 7a₁ is explicitly shown) which are formed integrally with the inner walls of the right-hand and left-hand sides 7a and 7b of the front lid 7. Before the apparatus is loaded with the tape cassette 301, the front lid 7 is retained by a front lid lock member 12 which is disposed on the left-hand side 3g of the lower half member 3, so that it is kept to be closed state.

Incidentally, the opening action of the front lid 7 is allowed only when the tape cassette 301 is loaded into the (not-shown) magnetic recording and/or reproducing apparatus. At this time, the front lid lock member 12 is released by a lid opening device of the apparatus to allow the front lid 7 to be opened, but a detailed description is omitted here.

Behind the front lid 7, the aforementioned rear lid 8 is suspended from a connecting plate 9 provided on the front lid 7 in such manners that both the rear lid 8 and the connecting plate 9 oppose a back face of the magnetic tape T which is extendingly interposed between the front lid 7 and the rear lid 8 connected to the connecting plate 9 along the back of the front lid 7. These rear lid 8 and the connecting plate 9 are integrally operable in openable and closable manners in cooperation with the front lid 7. When the front lid 7 is closed, a magnetic face or a front face of the magnetic tape T is protected by being covered with the front lid 7 and concurrently, upper and lower portions of the back face of the magnetic tape T are respectively protected by being covered with the connecting plate 9 and the rear lid 8.

Thus, the rear lid 8 and the connecting plate 9 protect the back face of the magnetic tape T against the dust invading from the openings 3a₁∼3a₃ provided on the lower half member 3. They further protect the magnetic tape T itself from being scratched by fingers or foreign objects which may come through the opening 3a.

The above mentioned tape cassette 301 of the present invention is constructed to keep an interchangeability with an industry standard VHS tape cassette, however, it is not limited to the standard VHS tape cassette but is adaptable to any kinds of tape cassettes having moderate size configurations.

Next, a detailed description is given to major structural members constituting the essential portions of the present invention referring to Fig. 4.

As shown in Fig. 4, with some exceptional portions the upper half member 2 and the lower half member 3 are individually formed and are separated at a height H₂ from a bottom of the lower half member 3, which is about one half of the height H₁ of the front lid 7 being substantially equal to that of the tape cassette 301.

Further, the upper half member 2 is protrudingly formed with front rims 2a₁, 2a₂, each having a thin thickness, being separated each other at a predetermined distance at the front thereof. The front rims 2a₁, 2a₂ are respectively provided with engagement recess 2a₁₁, 2a₂₁ (explicitly shown in Fig. 6(B))at bottoms thereof. The engagement recesses 2a₁₁, 2a₂₁ are respectively connected to open tops of guide grooves 3p₁, 3q₁ provided in protruding portions 3p, 3q of the lower half member 3 as described hereafter.

Thanks to the above construction, the assembly of the tape cassette is made easy, in particular, when the upper half member 2 temporarily assembled with the front lid 7 provided with the rear lid 8, is attached to the lower half member 3 as described hereafter.

Moreover, a guide 2a₃ for guiding the connecting plate 9 is protrudingly formed in a tapered shape in front of the upper half member 2 between the left-hand and the right-hand front rims 2a₁, 2a₂. The guide 2a₃ is detachably contacted with a cam 9a provided at a back surface of the connecting plate 9 supported by the front lid 7. When the front lid 7 is closed by a biasing force of a first biasing member 10 ( referred to as torsion spring 10) provided on a pin 7a₁ of the front lid 7 for biasing the front lid 7 in a lid closing direction, the connecting plate 9 is biased in a lid opening direction by a second biasing member 11 (referred to as torsion spring 11) for biasing the connecting plate 9 in a direction of the bottom of an upper plate 7d provided in the front lid 7, i.e., in a clockwise direction, however, the connecting plate 9 is restricted to move and keeps a closed state against the biasing force of the torsion spring 11 by causing the cam 9a thereof to abut on the guide 2a₃ of the upper half member 2. Concurrently, the rear lid 8 suspended from the connecting plate 9 is also biased in the lid opening direction by the torsion spring 11, but keeps a closed state subjected to the action of the connecting plate 9 against the torsion spring 11 as well.

Thus, the guide 2a₃ of the upper half member 2 and the cam 9a of the connecting plate 9 constitute a rear lid restricting tool for restricting the opening action of the rear lid 8 connected to the connecting plate 9 when the front lid 7 is closed.

Next, front portions of the left-hand and right-hand sides 3g, 3h of the lower half member 3 respectively have a height H₃ slightly lower than the height H₁ of the front lid 7 and the rear portions of the left-hand and right-hand sides 3g, 3h have a height H₂.

The upper half and lower half members 2, 3 are assembled into the casing 1A supporting the front lid 7 thereby, as follows. After the torsion spring 10 is inserted into the pin 7a₁ of the front lid 7, the front lid 7 is supported by the upper half member 2 by causing the pins 7a₁, 7b₁ of the front lid 7 to be inserted into holes 2g₁, 2h₁ having open ends each defined at the left side 2g and the right side 2h of the upper half member 2. Then, the upper half member 2 is assembled into the casing 1A by causing peripheral portions thereof to abut on peripheral portions of the lower half member 3. Thus, the front lid 7 is supported in the openable and closable manners in front of the casing 1A thereby.

Further, nearby both the sides of an opening 3a₂ defined in front of an approximate center of the lower half member 3, tape guides 3i, 3j projecting from a wall of the lower half member 3 for guiding the magnetic tape T are protrudingly and integrally provided in a plate shape separated at a predetermined distance. These tape guides 3i, 3j are slightly higher than the height H₂ of the lower half member 3. These tape guides 3i, 3j have a function to prevent the magnetic tape T from being closely contacted with the rear lid 8 and the connecting plate 9 due to static electricity. Further, these tape guides 3i, 3j are defined with recesses 3m, 3n therebehind to cause cutouts 8c₁, 8c₂ formed in the rear lid 8 to mount therein as described hereafter,

Further, these tape guide 3i, 3j are provided with tape guide rims 3i₁, 3j₁ at lower ends thereof for preventing the magnetic tape T from slipping off from the tape guides 3i, 3j.

Moreover, the tape guides 3i, 3j are integrally provided with a pair of protruding portions 3p and 3q therebehind, respectively, in conjunction with the recesses 3m, 3n so that the paired protruding portions protrude upward to have a height H₃ slightly lower than the height H₁ of the front lid 7. The paired protruding portions 3p, 3q are provided with a pair of opposing guide portions 3p₁ and 3q₁ (as will be referred to as the "guide grooves") which are "boot-shaped" grooves each having an open top in the lid opening direction and a closed bottom in the lid closing direction, respectively. In these paired guide grooves 3p₁ and 3q₁, there can be snugly and slidably fitted (in engagement) guide pins 8d₁ and 8d₂ which are formed on the rear lid 8.

In assembly process, after the guide pins 8d₁, 8d₂ of the rear lid 8 are inserted into the paired guide grooves 3p₁, 3q₁ having the open tops thereof, the open tops of the guide grooves 3p₁, 3q₁ are covered by the front rims 2a₁, 2a₂ of the upper half member 2 by causing the upper half member 2 to be placed in stacked manner on the lower half member 3. Thus, the guide pins 8d₁, 8d₂ of the rear lid 8 are prevented from coming off the open tops of the paired guide grooves 3p₁, 3q₁. Thus, the rear lid 8 of the present invention is easily assembled into the tape cassette 301, thanks to the provision of the open top of the paired guide grooves 3p₁, 3q₁, and is sufficiently opened in operation without slipping off from the paired guide grooves 3p₁, 3q₁ and the front rims 2a₁, 2a₂ of the upper half member 2 for coverring the open tops.

Further, the guide grooves 3p₁, 3q₁ for guiding the guide pins 8d₁, 8d₂ are provided nearby innermost portions of the opening 3a₂ defined approximately in front of the center of the lower half member 3, thus, the lid opening and closing operations can be performed without disturbing the tape loading members of the apparatus by causing the rear lid 8 and the connecting plate 9 to be kept parallel to the front lid 7.

The lower half member 3 is defined with holes 3r, 3s for installing the guide poles 6a, 6b shown in Fig. 7. The magnetic tape T is extendingly disposed between the guide poles 6a, 6b fitted in the holes 3r, 3s as shown with double-dotted lines.

Next, the front lid 7 is provided with a front plate 7c connected vertically to the upper plate 7d downward between a left-hand plate 7a and a right-hand plate 7b thereof, forming an "inverted L-shape" in cross section, and the front plate 7c has its lower end slightly extended backward to form a triangular (sectional view) portion 7c₁. The triangular portion 7c₁ has a function to cover the lower end of the magnetic tape T, which is disposed along the back surface of the front lid 7, in a sealed state together with a later-described lower end portion 8b₁ of the rear lid 8, when the front lid 7 is closed. Thus, the triangular portion 7c₁ protects the magnetic tape T in a state isolated from the openings 3a₁∼3a₃.

At the back side of the front lid 7, on the other hand, there depends from a bottom of the back of the upper plate 7d, connecting plate supporting portions 7d₁, 7d₂ (as will be referred to as the "plate supporting portion 7d₁, 7d₂") separated at a predetermined distance. The plate supporting portions 7d₁, 7d₂ are defined with holes 7d₁₁, 7d₂₁, respectively, for rotatably supporting the connecting plate 9.

Next, the connecting plate 9 of the main part of the present invention is disposed under the bottom of the upper plate 7d of the front lid 7 and has a function to protect the upper portion of the back face of the magnetic tape T disposed along the back surface of the front lid 7 by coverring it. The connecting plate 9 made of resin is formed so as to have a width approximately same to that of the rear lid 8, and so as to have an "inverted L-shape" at the front 9b opposite to the back surface of the front lid 7.

Moreover, the aforementioned cam 9a projects from the back surface of the connecting plate 9, and a pair of left-hand and right-hand pins 9c₁, 9c₂ are integrally provided with at a wall of a hollow mass portion which defines a hollow portion and with a distal end of the connecting plate 9, respectively, so as to face horizontally in a right direction. Thus, the connecting plate 9 can be rotatably and horizontally supported by the front lid 7 along the back surface of the front lid 7 by causing the left-hand pin 9c₁ with a torsion spring 11 to be inserted into the hole 7d₁₁ of the plate supporting portion 7d₁ and by causing the right-hand pin 9c₂ to be inserted into the hole 7d₂₁ of the plate supporting portion 7d₂. Incidentally, a distal end of the torsion spring 11 is engaged with the plate supporting portion 7d₁, and another distal end of the torsion spring 11 is engaged with the back surface of the connecting plate 9, thus, the torsion spring 11 forces the connecting plate 9 in the bottom surface direction of the upper plate 7d of the front lid 7 and the rear lid 8 suspended from the connecting plate 9 in the lid opening direction.

Incidentally, a reinforcement frame having an "U" letter-shape is provided around the hollow mass portion of the connecting plate 9.

Further, an arms 9d₁ is protrudingly provided in a slant downward direction from a wall of a left-hand cutout and an arm 9d₂ is provided in the same manner at a right-hand distal end, of the connecting plate 9. The arms 9d₁ and 9d₂ are respectively formed with holes 9d₁₁, 9d₂₁, horizontally. The rear lid 8 is suspended from the arms 9d₁, 9d₂ by causing the pins 8a₁, 8a₂ thereof to be inserted into the abovementioned holes 9d₁₁, 9d₂₁.

Next, the rear lid 8 of the present invention has a function to protect the back face and the under portion of the magnetic tape T disposed along the back surface of the front lid 7 by covering the under portion thereof.

The above rear lid 8 is formed by using resin to have an enough length in a longitudinal direction to cover the openings 3a₁∼3a₃ at a lower portion thereof by causing the lower portion to be inserted into the openings 3a₁∼3a₃, and a front side 8b of the rear lid 8 facing to the back surface of the front lid 7 has an inverted L letter-shape in a height direction.

Further, a pair of pins 8a₁, 8a₂ project horizontally in the inverted L-shape from the upper portion nearby both sides of the rear lid 8. The rear lid 8 is rotatably suspended from the connecting plate 9 by causing the paired pins 8a₁, 8a₂ to be inserted into the holes 9d₁₁, 9d₂₁ of the arms 9d₁, 9d₂ provided on the connecting plate 9. Further, a pair of cutouts 8c₁, 8c₂ are formed at an under portion of the rear lid 8 separated at a predetermined distance, and each of the guide pins 8d₁, 8d₂ protrudes horizontally in an opposite direction from a wall of the respective cutouts 8c₁, 8c₂.

These pins 8d₁, 8d₂ are slidably fitted with the guide grooves 3p₁, 3q₁, respectively, formed in the protruding portions 3p, 3q of the lower half member 3 as mentioned in the foregoing.

Incidentally, parts of the cutouts 8c₁, 8c₂ of the rear lid 8 are formed to be allowed to freely enter into the recesses 3m, 3n of the lower half member 3 without abutting thereon. When the front lid 7 is closed, the lower end portion 8b₁ except for the cutouts 8c₁, 8c₂ protects the lower portion of the magnetic tape T in a wrapping manner by abutting on the inner wall of the triangle portion 7c₁ of the front lid 7.

As mentioned above, when the rear lid 8 is connected to the front lid 7 by using the connecting plate 9, the rear lid 8 is rotated on the two pairs of rotating pins consisting of the paired pins (9c₁, 9c₂) connecting the connecting plate 9 to the front lid 7 and the paired pins (8a₁, 8a₂) connecting the connecting plate 9 to the rear lid 8, thus, the rear lid 8 has two degrees of freedom of motion in link mechanism, which enables the connecting plate 9 and the rear lid 8 to be opened and closed smoothly parallel to the front lid 7 in cooperation with the font lid 7.

Next, a description is given to an assembly process of the tape cassette 301 using the aforementioned major components referring to Figs 5∼7. Reference characters shown in Figs. 6(A)∼6(C) show those of left-hand components with respect to a center line, and the description of those of the right-hand components which are symmetrical to those of the left-hand ones are omitted.

Referring to Figs. 5 and 6(A), at first, the torsion spring 10 is inserted into the the pin 7a₁ of the front lid 7. After the torsion spring 11 is inserted into the pin 9c₁ of the connecting plate 9, the connecting plate 9 is rotatably supported on the front lid 7 by causing the pin 9c₁ to be supported with plate supporting portion 7d₁ of the front lid 7. Further, the rear lid 8 is suspended from the connecting plate 9 by causing the pin 8a₁ of the rear lid 8 to be supported with the arm 9d₁ of the connecting plate 9, thus the rear lid 8 is connected to the front lid by means of the connecting plate 9.

Next, referring to Fig. 6(B), the front lid 7 is temporarily assembled to the upper half member 2.

In this process, after the pin 7a₁ of the front lid 7 is inserted into the open end hole 2g₁ of left side of the upper half member 2 from a front direction, the front lid 7 is displaced upward to open and is held at that position manually against the torsion spring 10.

In cooperation with the above action, since the rear lid 8 is also displaced upward, the front lid 7 is temporarily fabricated to the upper half member 2 by causing the guide pin 8d₁ of the rear lid 8 to be engaged with the engagement recess 2a₁₁ of the upper half member 2 manually.

Next, as shown in Fig. 6(C), the upper half member 2 is assembled to the lower half member 3 keeping a state where the guide pin 8d₁ is engaged with the engagement recess 2a₁₁. Incidentally, since the magnetic tape T is accommodated in the lower half 3 in advance, the upper half member 2 carrying the front lid 7 and the rear lid 8 in a lid opened state is safely and securely assembled to the lower half member 3 without causing the front and rear lids 7, 8 to contact with the magnetic tape T.

In this stage, the front rim 2a₁ of the upper half member 2 abuts on the upper end portion of the protruding portion 3p, connecting the engagement recess 2a₁₁ to the open top of the guide groove 3p₁. Therefore, the guide pin 8d₁ of the rear lid 8 is guided by the guide groove 3p₁ without coming off from the open top of the guide groove 3p₁, which enables a speedy and secure assembly to be performed and contributes to increase reliability and quality of the tape cassette 301.

When the guide pin 8d₁ of the rear lid 8 is manually released from the engagement recess 2a₁₁, the front lid 7 is rotated downward to close by the biasing force of the torsion spring 10, thus, the guide pins 8d₁, 8d₂ of the rear lid 8 descend along the guide grooves 3p₁, 3q₁ in cooperation with the closing action of the front lid 7, as shown in Fig. 7, thus, the assembly of the tape cassette 301 is completed.

In this tape cassette assembled state, the magnetic tape T is extended along the tape guides 3i, 3j from the guide pole 6a of the supply side to the guide pole 6b of the take-up side. The front face of the magnetic tape T is protected by being covered with the front lid 7 and the upper and lower portions of the rear face thereof are respectively protected by being covered with the connecting plate 9 and the rear lid 8.

Incidentally, rotational movement of the connecting plate 9 is restricted by the cam 9a provided at the back surface of the connecting plate 9 to abut on the guide 2a₃ protrudingly provided on the upper half member 2 in the tapered shape, so that the connecting plate 9 is held in a closed state against the biasing force of the torsion spring 11.

Further, the guide pins 8d₁, 8d₂ of the rear lid 8 suspended from the connecting plate 9 come to the lower ends of the guide grooves 3p₁, 3q₁ of the protruding portions 3p, 3q provided on the lower half member 3, and the rear lid 8 is held in the closed state by being subjected to the closed state of the connecting plate 9. The rear lid 8 and the connecting plate 9 are prevented from displacing in the right and left directions toward the front lid 7 by being connected to one another.

### <Lid Opening Action of Tape Cassette>

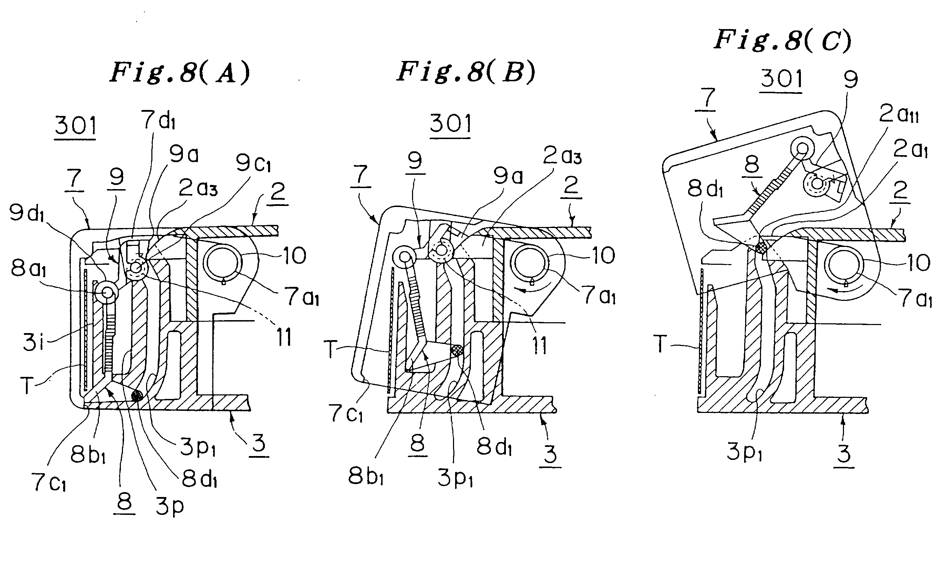

A description is given to lid opening and closing actions of the tape cassette 301 referring to the Figs. 7 and 8(A)∼8(C).

Fig. 8(A) is a cross-sectional view for explaining lid opening and closing actions of the tape cassette, wherein the front lid, the rear lid and the connecting plate are closed; Fig. 8(B) is a cross-sectional view for explaining lid opening and closing actions of the tape cassette, wherein the front lid, the rear lid and the connecting plate are on the way to the opening state; and Fig. 8(C) is a cross-sectional view for explaining lid opening and closing actions of the tape cassette, wherein the front lid is fully opened, and the pin 8d₁ of the rear lid comes to the open top of the guide groove of the lower half member.

It is noted that in Figs. 8(A)∼8(C), the left-hand reference characters of the components of the tape cassette 301 only are shown and a description for the right-hand ones symmetric to the left-hand ones are omitted for simplicity.

A state shown in Fig. 8(A) is identical to one shown in Fig.7 where the front lid 7 is closed, and the magnetic tape T is extended along the back surface of the front lid 7. Further, the connecting plate 9 is rotatably supported on the plate supporting portion 7d₁ of the front lid 7 therebehind by causing the pin 9c₁ thereof to be engaged, and the rear lid 8 is suspended from the arm 9d₁ of the connecting plate 9 by causing the pin 8a₁ of the rear lid 8 to be engaged, and the front lid 7 is biased in the lid closed direction with the torsion spring 10.

Further, the guide pin 8d₁ provided nearby the under portion of the rear lid 8 comes to the closed end of the guide groove 3p₁ formed in the protruding portion 3p of the lower half member 3 being engaged with the guide groove 3p₁. The rear lid 8 protects the lower portion of the magnetic tape T against dust and the fingerprint from the openings 3a₁∼3a₃ (Fig. 7) in a wrapping manner by causing the lower end portion 8b₁ of the rear lid 8 to abut on the inner wall of the triangle portion 7c₁ of the front lid 7.

Since the front face of the magnetic tape T is protected with the front lid 7, and the upper and lower portions of the back face thereof are respectively protected with the connecting plate 9 and the rear lid 8, thus the magnetic tape T is completely protected when the front lid 7 is closed, i.e., when it is not used.

Further, the connecting plate 9 is restricted to be held in the closed state against the biasing force of the torsion spring 11 by causing the cam 9a thereof to abut on the guide 2a₃ protrudingly provided in the tapered shape on the upper half member 2.

As shown in Fig. 8(B), when the tape cassette 301 is loaded in the recording and reproducing apparatus (not shown), the front lid 7 is rotated to open in a clockwise direction (an arrow direction) on the pins 7a₁, 7b₁ of the front lid 7.

As the front lid 7 is rotated to open against the biasing force of the torsion spring 10, the connecting plate 9 is displaced upward by causing the cam 9a provided at back surface of the connecting plate 9 to be abutting on the guide 2a₃ of the upper half member 2, whereby the rear lid 8 suspended from the connecting plate 9 is displaced upward by being pivoted with the pin 8a₁ thereof, thus, the guide pin 8d₁ provided on the rear lid 8 is displaced upward along the guide groove 3p₁.

Therefor, the rear lid 8 suspended from the connecting plate 9 is opened in cooperation with the opening action of the front lid 7. The rear lid 8 can be smoothly opened parallel to the front lid 7 because of achieving two phases of freedom in the link mechanism.

Further, when the front and rear lids 7, 8 are rotated to open, the triangle portion 7c₁ of the front lid 7 recedes from the front face of the magnetic tape T, on the other hand, the rear lid 8 is opened so that the lower end portion 8b₁ of the rear lid 8 is kept away from contacting with the back face of the magnetic tape T because the guide pin 8d₁ of the rear lid 8 is guided in the guide groove 3p₁.

Next, when the front lid 7 is further opened clockwise (i.e., in the direction of arrow) on the pin 7a₁ from the state of Fig. 8(B) as shown in Fig. 8(C), the guide pin 8d₁ of the rear lid 8 associated with the front lid 7 comes to the open top of the guide groove 3p₁ to abut on the engagement recess 2a₁₁ provided on the bottom of the front rim 2a₁ for coverring the open top of the guide groove 3p₁, thus the rear lid 8 is held at a position where it is not allowed to be opened any more.

At this time, the guide pin 8d₁ provided on the rear lid 8 is prevented from coming off the guide groove 3p₁ upward by the front rim 2a₁ of the upper half member 2. Thus, it enables the front and rear lids 7, 8 to open sufficiently, which contributes to improve the reliability and quality of the tape cassette 301.

Incidentally, when the front and rear lids 7, 8 are closed, the closing action is reversed from the aforementioned ones, i.e., in the order of Fig. 8(C), Fig. 8(B), and Fig. 8(A), and their detailed description is omitted.

As a result, according to the present invention, when the tape cassette 301 is not mounted on the recording and/or reproducing apparatus, the front face of the magnetic tape extended along the back surface of the front lid is protected by the front lid, and the upper and lower portions of the back face of the magnetic tape are respectively protected by the connecting plate and the rear lid, thus the magnetic tape is completely protected against invasion of dust and fingerprints and further against foreign objects.

When the tape cassette is mounted in the apparatus, the rear lid is more easily opened and closed parallel to the front lid because the rear lid suspended by the front lid through the connecting plate is given a more degree of freedom, i.e., 2 degrees of freedom based on a pivot point between the front lid and the connecting plate, and another pivot point between the connecting plate and the rear lid, compared with the foregoing prior art such as 8 mm tape cassette wherein the rear lid is directly suspended on the front lid.

In the assembly process, when the front lid connected with rear lid is attached to the upper half member, the pin of the rear lid is temporarily engaged with the engagement recess of the upper half member, thus, the above semi-assembled upper half member is securely and safely attached to the lower half member without causing the front lid and the rear lid to contact with the magnetic tape accommodated in the lower half member.

Moreover, the pin of the rear lid is guided by the guide groove of which the top open end is covered with the engagement recess, so that the pin is prevented from coming off from the open top of the guide groove, which enables a speedy and secure assembly to be performed and contributes to increase reliability and quality of the tape cassette 301.

## Claims

1. A tape cassette having a casing comprising an upper half member (2) and a lower half member (3) for accommodating a pair of reels (4, 5) disposed in the casing for winding a magnetic tape on the pair of reels (4, 5) and threading the magnetic tape (T) along opening means (3a1, 3a2, 3a3), a front lid (7) disposed in openable/closable manners at the front of the casing (1A) for protecting a front face of the magnetic tape (T) and a rear lid (8) disposed at a back side of the front lid (7) for protecting a back face of the magnetic tape (T), characterized in that
the opening means (3a1, 3a2, 3a3) defined in a front of the lower half member (3) for allowing insertion of tape loading members of a recording and reproducing apparatus: and
a pair of tape guides (3i, 3j) for guiding the magnetic tape (T) therealong, the pair of tape guides (3i, 3j) projecting outwardly from a wall of the lower half member (3) in the opening means (3a1, 3a2, 3a3) in such a manner that the opening means (3a1, 3a2, 3a3) is divided into three openings.

2. A tape cassette as claimed in claim 1 characterized in that each of the tape guides (31, 33) is provided with a tape guide rim (3i1, 3j1) at a lower end portion thereof for preventing the magnetic tape (T) from slipping off from the tape guides (3i, 3j).
